# EUROPÄISCHE PATENTSCHRIFT

(11) **EP 2 948 351 B1**
(45) Veröffentlichungstag und Bekanntmachung des Hinweises auf die Patenterteilung: **02.10.2019**
(21) Anmeldenummer: 14700734.8
(22) Anmeldetag: 17.01.2014
(51) Int. Cl.: B60T 13/567, B60T 8/36

(54) **HALTEBAUGRUPPE**
SUPPORT ASSEMBLY
STRUCTURE DE SUPPORT

(30) Priorität: 22.01.2013 DE 102013200905; 13.11.2013 DE 102013223087
(43) Veröffentlichungstag der Anmeldung: 02.12.2015
(73) Patentinhaber: Continental Teves AG & Co. OHG, 60488 Frankfurt am Main (DE)
(72) Erfinder: TARANDEK, Kristijan, 63263 Neu-Isenburg (DE)
(86) Internationale Anmeldenummer: PCT/EP2014/050918
(87) Internationale Veröffentlichungsnummer: WO 2014/114565

(56) Entgegenhaltungen:
- EP-A1- 0 262 006
- EP-A1- 1 547 890
- FR-A1- 2 781 259
- FR-A1- 2 843 575
- FR-A1- 2 920 380
- FR-A1- 2 925 444

## Beschreibung

Die Erfindung betrifft eine Haltebaugruppe zur Fixierung eines an einem Bremsgerät befestigten Flanschteils an einer Spritzwand eines Kraftfahrzeugs nach dem Oberbegriff des Patentanspruchs 1.

Eine Haltebaugruppe zur Fixierung eines an einem Bremsgerät vorgesehenen Flanschteils an einer Spritzwand eines Kraftfahrzeugs, die einen Motorraum von einem Fahrzeuginnenraum trennt, ist beispielhaft aus der DE 44 03 466 A1 bekannt. Die Haltebaugruppe weist zwei Stehbolzen auf, die sich vom Flanschteil des Bremsgeräts durch die Spritzwand in den Fahrzeuginnenraum eingeführt und vom Fahrzeuginnenraum verschraubt werden müssen. Der Aufwand zum Einbau und wieder Entfernen des Bremsgeräts ist somit aufgrund der schlechten Zugänglichkeit der Spritzwand im Fahrzeuginnenraum erheblich. Überdies muss das Bremsgerät im Motorraum gleichzeitig abgestützt werden, um ein Verkanten und Herausfallen zu verhindern.

Die FR 2 781 259 A1 offenbart eine Haltebaugruppe für einen Hydraulikzylinder, der als Flanschteil einen umlaufenden Kragen aufweist, dem mehrere über dem Umfang des Hydraulikzylinders verteilt angeordnete Formschlusselemente vorgeordnet sind, die zur formschlüssigen Befestigung an einer Halteplatte durch einen mit der Halteplatte verbundenen Rohrkörper hindurchgeführt und anschließend mit mehreren, sich am Rohrkörper radial nach innen erstreckenden Formschlusselemente in Überdeckung gebracht werden, wozu das Flanschteil mit seinen radial nach außen gerichteten Formschlusselementen gegenüber den radial nach innen gerichteten Formschlusselementen des Rohrkörpers verdreht wird.

Aus FR 2 843 575 A1 geht eine Haltebaugruppe zur Fixierung eines an einem Bremskraftverstärker befestigten Flanschteils an einer Spritzwand eines Kraftfahrzeugs hervor, an der eine Halteplatte befestigt ist, die mittels einer Bajonettverbindung mit dem Flanschteil formschlüssig in Eingriff steht. Das ringscheibenförmige Flanschteil weist hierzu an seinem Umfang mehrere radial nach außen gerichtete Vorsprünge auf, die in mehrere Ausnehmungen eines mit der Halteplatte verbunden Gehäuse eingreifen, das im Wesentlichen als Hohlzylinder ausgeführt ist, dessen Außenumfang mehrere radial nach innen gerichtete Vorsprünge aufweist, in welche die am Flanschteil radial nach außen gerichtete Vorsprünge nach einer Verdrehung des Flanschteils gegenüber dem Gehäuse um einen definierten Winkel eingreifen.

Es ist die Aufgabe der Erfindung, eine Haltebaugruppe der angegebenen Art dahingehend zu verbessern, dass mit möglichst geringem konstruktivem als auch funktionellem Aufwand eine besonders einfache und schnelle Montage des Bremsgeräts an der Spritzwand gewährleistet wird, wobei die Zuführung, Ausrichtung und Befestigung des Bremsgeräts mit einfachen Mitteln ausschließlich an der dem Motorraum zugewandten Seite der Spritzwand erfolgen soll.

Diese Aufgabe wird erfindungsgemäß für eine Haltebaugruppe der genannten Art durch die kennzeichnenden Merkmale des Patentanspruchs 1 gelöst.

Weitere Merkmale der Erfindung sind den einzelnen Patentansprüchen als auch aus der Beschreibung eines Ausführungsbeispiels anhand mehrerer Zeichnungen zu entnehmen.

Es zeigen:
- Figur 1: eine perspektivische Gesamtansicht einer mit den erfindungswesentlichen Merkmalen versehenen Haltebaugruppe vor der Montage eines Bremsgeräts an einer Spritzwand,
- Figur 2: eine Draufsicht auf die Haltebaugruppe nach erfolgter Endmontage,
- Figur 3: eine Schnittdarstellung durch die an der nicht dargestellten Spritzwand montierten Haltebaugruppe, die das Bremsgerät trägt.

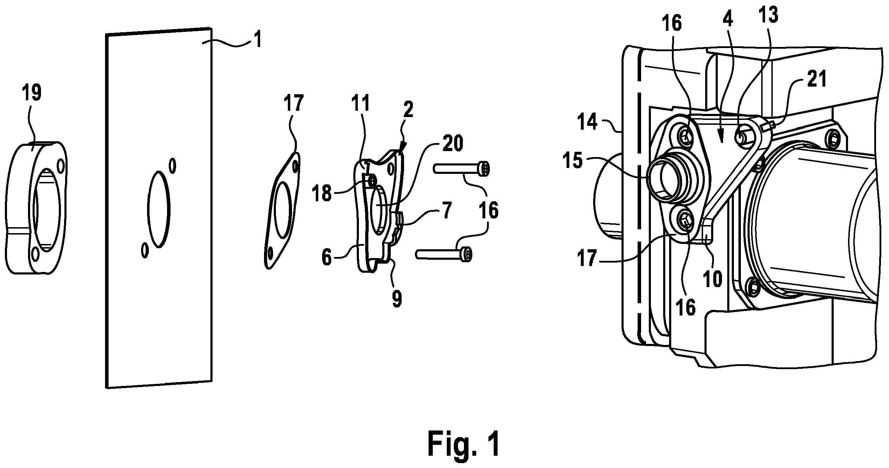

Die Figur 1 zeigt in einer Perspektivansicht die Einzelheiten einer Haltebaugruppe zur Fixierung eines an einem Bremsgerät 14 vorgesehenen Flanschteils 4 an einer Spritzwand 1 eines Kraftfahrzeugs, die einen Motorraum von einem Fahrzeuginnenraum trennt. Gemäß der Abbildung wird an der dem Motorraum zugewandten Seite der Spritzwand 1 eine Halteplatte 2 befestigt, die Elemente einer Formschlussverbindung 3 aufweist, die mit dem am Bremsgerät 14 durch zwei Schrauben 16 befestigten Flanschteil 4 in Eingriff gebracht wird. Auch die Befestigung der Halteplatte 2 an der Spritzwand 1 erfolgt mittels zweier diametral angeordneten Halteschrauben 16, wozu innerhalb des Fahrzeuginnenraums ein Pedalbock 19 an der Spritzwand 1 angeordnet wird, in den die beiden Schrauben 16 von der Motorraumseite hineingedreht werden. Zwischen der Halteplatte 2 und der Spritzwand 1 sowie zwischen der Halteplatte 2 und dem Flanschteil 4 ist zum Schutz gegen eindringende Feuchtigkeit und Schmutz jeweils eine Dichtung 17 angeordnet.

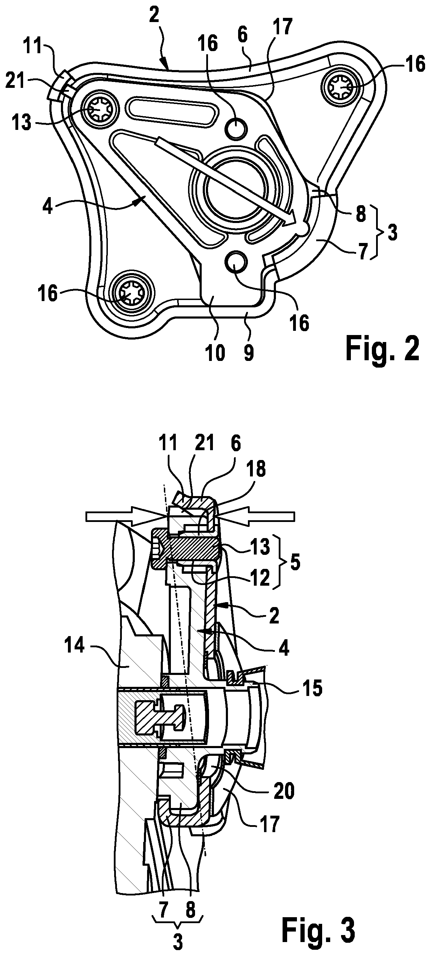

Wie aus der Figur 2 in einer Draufsicht auf die gesamte Haltebaugruppe gut zu erkennen ist, sind diametral zu den Elementen der Formschlussverbindung 3 weitere Elemente einer Kraftschlussverbindung 5 an der Haltebaugruppe angeordnet, sodass in der vorliegenden Ansicht das Flanschteil 4 mit der Halteplatte 2 in einem endfixierten Eingriff steht.

Zur besseren Überschaubarkeit der erfindungswesentlichen Merkmale wurde in der gewählten Draufsicht auf die Darstellung des mit dem Flanschteil 4 fest verbundenen Bremsgeräts 14 verzichtet. Wegen dem für die beiden Halteschrauben 16 und der Endfixierschraube 13 erforderlichen freien Montagezugang ist der Außenumfang der Halteplatte 2 asymmetrisch, im Bereich jeder Schraubenaufnahme jeweils nach Art einer sich radial nach außen erstreckenden Lasche ausgeformt und von einem umlaufenden Rahmen 6 begrenzt, wobei der durch plastische Verformung der Halteplatte 2 kostengünstig hergestellte Rahmen 6 zur Ausbildung des Formschlussverbindung 3 zu einem Haken 7 plastisch verformt ist, mit dem ein am Außenumfang des asymmetrisch geformten Flanschteils 4 ausgebildeter radialer Vorsprung 8 in Eingriff steht.

Zur präzisen Ausrichtung und Aufnahme des Flanschteils 4 an der Halteplatte 2 weist der Rahmen 6 überdies eine Stützkante 9 auf, die nach dem Einsetzen des Flanschteils 4 in den Rahmen 6 (entsprechend der Pfeilrichtung) von einem am Außenumfang des Flanschteils 4 vorgesehenen weiteren Vorsprung 10 kontaktiert ist, der somit das Flanschteil 4 über den weiteren Vorsprung 10 präzise an der Halteplatte 2 führt. Die Stützkante 9 ist unterhalb des Hakens 7, näherungsweise an der tiefsten Stelle des Rahmens 6 vorgesehen, sodass zur leichten Montage des Bremsgeräts 14 an der Spritzwand 1 das am Bremsgerät 14 vormontierte Flanschteil 4 mit seinem zungenförmigen Vorsprung 10 auf die Stützkante 9 des Rahmens 6 zur Anlage gelangt, sobald das Flanschteil 4 oberhalb des Vorsprungs 10 mit seinem dem Haken 7 zugewandten Vorsprung 8 hinter den Haken 7 gekippt ist.

An dem diametral zum Haken 7 ausgerichteten Abschnitt des Rahmens 6 ist eine trichterförmig erweiterte Anschlagfläche 11 vorgesehen, an der das plattenförmige Flanschteil 4 mit seinem an der Mantelfläche ausgebildeten Keil 21 anliegt, nachdem der Vorsprung 8 des Flanschteils 4 formschlüssig mit dem Haken 7 im Eingriff steht, wobei zur Herstellung der Kraftschlussverbindung 5 das Flanschteil 4 unter radialer Vorspannung der Endfixierschraube 13 gegen die Halteplatte 2 gedrückt wird.

Als ein wesentliches Element der Kraftschlussverbindung 5 ist in diametraler Anordnung zum Haken 7 in der Halteplatte 2 ein Innengewinde 12 vorgesehen, in das als weiteres Element der Kraftschlussverbindung 5 die das Flanschteil 4 durchdringende Endfixierschraube 13 aus der Richtung des Motorraums / Bremsgeräts 14 eingedreht ist.

In der Figur 3 ist im Längsschnitt die komplett fertiggestellte Haltebaugruppe abgebildet, wonach das Innengewinde 12 in einer lotrecht an der Halteplatte 2 angeordneten Hülse 18 aufgenommen ist, die mit ihrem Bund an der Halteplatte 2 anliegt und sich mit dem hiervon abgewandten Hülsenende abschnittsweise in eine Durchgangsbohrung des Flanschteils 4 erstreckt. Mittels der Hülse 18 ist in Verbindung mit der an der Halteplatte 2 vorgesehenen Stützkante 9 das Flanschteil 4 mit dem Bremsgerät 14 präzise an der Halteplatte 2 ausgerichtet, sodass die relativ kurze Endfixierschraube 13 gut zugänglich zwischen dem Bremsgerät 14 und dem Flanschteil 4 in das Innengewinde 12 eingedreht werden kann.

Wie die Abbildung nach Fig. 3 verdeutlicht, ist das Flanschteil 4 als eine an die Innenkontur der Halteplatte 2 angepasste massive Platte ausgeführt, die zum Hindurchführen einer Pedalstange eine rohrförmigen Fortsatz 15 aufweist, der sich durch eine großzügig dimensionierte Öffnung 20 in der Halteplatte 2 in den Fahrzeuginnenraum erstreckt.

Die Halteplatte 2 ist bevorzugt durch Stanzen von Stahlblech hergestellt, womit sich gleichzeitig gute Voraussetzungen zum Stanzen der Öffnung 20, der für das Innengewinde 12 und die Hülse 18 erforderlichen Öffnung als auch für die weiteren beiden, für die Halteschrauben 16 erforderlichen Löcher in der Halteplatte 2 ergeben. Der Rahmen 6 als auch die für die Formschlussverbindung 3 erforderliche spezielle Ausgestaltung des Rahmens zum Haken 7 sind an der Halteplatte 2 bevorzugt durch Formpressen bzw. Tiefziehen einfach und damit kostengünstig hergestellt.

Hingegen ist das Flanschteil 4 in Verbindung mit dem zur Darstellung der Formschlussverbindung 3 erforderlichen radialen Vorsprung 8 bevorzugt als Druckgussteil aus einer Leichtmetalllegierung oder ggf. durch Spritzgießen eines faserverstärkten Kunststoffs kostengünstig hergestellt.

Entsprechend den aufgezeigten Merkmalen der Erfindung ist somit eine Haltebaugruppe geschaffen, die eine einfache und schnelle Montage als auch Demontage des Bremsgeräts 14 an der Spritzwand 1 ausschließlich vom Motorraum aus erlaubt, wobei die Montage des Bremsgeräts 14 durch Einhängen des an dem Flanschteil 4 vorgesehenen Vorsprungs 8 in den Haken 7 der Halteplatte 2 und dem anschließenden Festschrauben des Flanschteils 4 an der Halteplatte 2 mittels der Endfixierschraube 13 in kürzester Zeit geschieht.

### Bezugszeichenliste

- 1: Spritzwand
- 2: Halteplatte
- 3: Formschlussverbindung
- 4: Flanschteil
- 5: Kraftschlussverbindung
- 6: Rahmen
- 7: Haken
- 8: Vorsprung
- 9: Stützkante
- 10: Vorsprung
- 11: Anschlagfläche
- 12: Gewinde
- 13: Endfixierschraube
- 14: Bremsgerät
- 15: Fortsatz
- 16: Halteschraube
- 17: Dichtung
- 18: Hülse
- 19: Pedalbock
- 20: Öffnung
- 21: Keil

## Patentansprüche

1. Haltebaugruppe zur Fixierung eines an einem Bremsgerät (14) vorgesehenen Flanschteils (4) an einer Spritzwand (1) eines Kraftfahrzeugs, die einen Motorraum von einem Fahrzeuginnenraum trennt, wobei an der dem Motorraum zugewandten Seite der Spritzwand (1) eine Halteplatte (2) befestigt ist, die eine Formschlussverbindung (3) aufweist, die mit dem Flanschteil (4) in Eingriff steht, **dadurch gekennzeichnet, dass** die Halteplatte (2) zur Aufnahme zweier Halteschrauben (16) und einer Endfixierschraube (13) asymmetrisch geformt ist, wobei diametral zur Formschlussverbindung (3) an der Halteplatte (2) eine die Endfixierschraube (13) aufweisende Kraftschlussverbindung (5) vorgesehen ist, die mit dem Flanschteil (4) in Eingriff steht, dass der Außenumfang der Halteplatte (2) von einem umlaufenden Rahmen (6) begrenzt ist, der zur Ausbildung der Formschlussverbindung (3) als Haken (7) durch eine plastische Verformung der Halteplatte (2) hergestellt ist, mit dem ein am Außenumfang des asymmetrisch geformten Flanschteils (4) vorgesehener radialer Vorsprung (8) in Eingriff steht, und dass der Rahmen (6) zur präzisen Ausrichtung des Flanschteils (4) an der Halteplatte (2) eine unterhalb des Hakens (7) vorgesehene Stützkante (9) aufweist, die nach dem Einsetzen des Flanschteils (4) in den Rahmen (6) von einem am Außenumfang des Flanschteils (4) vorgesehenen weiteren, zungenförmigen Vorsprung (10) kontaktiert ist, sobald das Flanschteil (4) oberhalb des Vorsprungs (10) mit seinem dem Haken (7) zugewandten Vorsprung (8) hinter den Haken (7) gekippt ist.

2. Haltebaugruppe nach Anspruch 1, **dadurch gekennzeichnet, dass** die Stützkante (9) näherungsweise an der tiefsten Stelle des Rahmens (6) vorgesehen ist.

3. Haltebaugruppe nach Anspruch 1, **dadurch gekennzeichnet, dass** an dem diametral zum Haken (7) ausgerichteten Abschnitt des Rahmens (6) eine trichterförmig erweiterte Anschlagfläche (11) vorgesehen ist, an der das Flanschteil (4) infolge der im Bereich der Anschlagfläche (11) angeordneten Kraftschlussverbindung (5) mit seiner abschnittsweise keilförmig ausgebildeten Mantelfläche (Keil 21) unter radialer Vorspannung anliegt.

4. Haltebaugruppe nach Anspruch 1, **dadurch gekennzeichnet, dass** als ein Bestandteil der Kraftschlussverbindung in der Halteplatte (2) ein Innengewinde (12) vorgesehen ist, in das als weiteres Bestandteil der Kraftschlussverbindung (5) die das Flanschteil (4) durchdringende Endfixierschraube (13) aus der Richtung des Bremsgeräts (14) eingedreht ist.

5. Haltebaugruppe nach Anspruch 4, **dadurch gekennzeichnet, dass** das Innengewinde (12) in einer an der Halteplatte (2) fixierten Hülse (18) aufgenommen ist, die sich abschnittsweise in eine Durchgangsbohrung des Flanschteils (4) erstreckt, wobei mittels der Hülse (18), dem Haken (7) und der Stützkante (9) an der Halteplatte (2) das Flanschteil (4) mit dem daran befestigten Bremsgerät (14) präzise an der Halteplatte (2) ausgerichtet ist.

6. Haltebaugruppe nach Anspruch 1, **dadurch gekennzeichnet, dass** das Flanschteil (4) als eine abschnittsweise an die Kontur der Halteplatte (2) angepasste Platte ausgeführt ist, die zum Hindurchführen einer Pedalstange mit einem rohrförmigen Fortsatz (15) versehen ist, der sich durch eine großzügig dimensionierte Öffnung (20) in der Halteplatte (2) hindurch erstreckt.

7. Haltebaugruppe nach Anspruch 1, **dadurch gekennzeichnet, dass** die Halteplatte (2) mittels der zwei diametral angeordneten Halteschrauben (16) an der Spritzwand (1) befestigt ist.

8. Haltebaugruppe nach Anspruch 1, **dadurch gekennzeichnet, dass** zwischen der Halteplatte (2) und der Spritzwand (1) sowie zwischen der Halteplatte (2) und dem Flanschteil (4) jeweils eine Dichtung (17) angeordnet ist.

## Claims

1. Holding assembly for fixing a flange part (4), which is provided on a braking device (14), to a bulkhead (1) of a motor vehicle, said bulkhead separating an engine compartment from a vehicle interior, wherein a holding plate (2) is fastened to the side of the bulkhead (1) facing the engine compartment, said holding plate having a positive connection (3) which is in engagement with the flange part (4), **characterized in that** the holding plate (2) is shaped asymmetrically for receiving two holding screws (16) and a final fixing screw (13), wherein a non-positive connection (5) having the final fixing screw (13) is provided diametrically to the positive connection (3) on the holding plate (2), said non-positive connection being in engagement with the flange part (4), **in that** the outer periphery of the holding plate (2) is defined by a peripheral frame (6), which is produced as a hook (7), by plastic deformation of the holding plate (2), to form the positive connection (3), a radial projection (8) provided on the outer periphery of the asymmetrically shaped flange part (4) being in engagement therewith, and **in that** for the accurate alignment of the flange part (4) on the holding plate (2), the frame (6) has a supporting edge (9) which is provided below the hook (7) and, after the insertion of the flange part (4) into the frame (6), is brought into contact with a further, tongue-shaped projection (10) provided on the outer periphery of the flange part (4), as soon as the flange part (4) above the projection (10) is tilted behind the hook (7) with its projection (8) facing the hook (7).

2. Holding assembly according to Claim 1, **characterized in that** the supporting edge (9) is provided approximately at the lowest point of the frame (6).

3. Holding assembly according to Claim 1, **characterized in that** that portion of the frame (6) which is aligned diametrically to the hook (7) is provided with a stop surface (11) which is widened in a funnel-shaped manner and against which the flange part (4) lies under radial prestress as a result of the non-positive connection (5), which is arranged in the region of the stop surface (11), with its circumferential surface which is of wedge-shaped design in sections (wedge 21).

4. Holding assembly according to Claim 1, **characterized in that** an internal thread (12) is provided in the holding plate (2) as part of the non-positive connection, into which internal thread (12) the final fixing screw (13) is screwed, as a further part of the non-positive connection (5), from the direction of the braking device (14), the final fixing screw (13) penetrating the flange part (4).

5. Holding assembly according to Claim 4, **characterized in that** the internal thread (12) is accommodated in a sleeve (18) which is fixed on the holding plate (2) and extends in sections into a through bore of the flange part (4), wherein the flange part (4) with the braking device (14) fastened thereto is aligned accurately on the holding plate (2) by means of the sleeve (18), the hook (7) and the supporting edge (9) on the holding plate (2).

6. Holding assembly according to Claim 1, **characterized in that** the flange part (4) is designed as a plate which is adapted in sections to the contour of the holding plate (2) and is provided for the passage of a pedal rod having a tubular extension (15) which extends through a generously dimensioned opening (20) in the holding plate (2) .

7. Holding assembly according to Claim 1, **characterized in that** the holding plate (2) is fastened to the bulkhead (1) by means of the two diametrically arranged holding screws (16).

8. Holding assembly according to Claim 1, **characterized in that** a respective seal (17) is arranged between the holding plate (2) and the bulkhead (1) and between the holding plate (2) and the flange part (4) .

## Revendications

1. Ensemble de retenue pour la fixation d'une partie de bride (4) prévue sur un appareil de frein (14) à un tablier d'auvent (1) d'un véhicule automobile, qui sépare un compartiment moteur d'un habitacle de véhicule, dans lequel une plaque de retenue (2) est fixée sur le côté du tablier d'auvent (1) tourné vers le compartiment moteur, laquelle comprend une liaison par complémentarité de forme (3) qui est en prise avec la partie de bride (4), **caractérisé en ce que** la plaque de retenue (2) est formée de manière asymétrique pour recevoir deux vis de retenue (16) et une vis de fixation finale (13), une liaison par force (5) comprenant la vis de fixation finale (13) étant prévue sur la plaque de retenue (2) de manière diamétralement opposée à la liaison par complémentarité de forme (3), laquelle liaison par force est en prise avec la partie de bride (4), **en ce que** la périphérie extérieure de la plaque de retenue (2) est limitée par un cadre périphérique (6) qui est fabriqué sous forme de crochet (7) par une déformation plastique de la plaque de retenue (2) pour réaliser la liaison par complémentarité de forme (3), crochet avec lequel est en prise une saillie radiale (8) prévue sur la périphérie extérieure de la partie de bride (4) formée de manière asymétrique, et **en ce que** le cadre (6) comprend un bord d'appui (9) prévu en dessous du crochet (7) pour l'orientation précise de la partie de bride (4) sur la plaque de retenue (2), lequel bord d'appui est mis en contact avec une autre saillie (10) en forme de languette prévue sur la périphérie extérieure de la partie de bride (4) après l'insertion de la partie de bride (4) dans le cadre (6), dès que la partie de bride (4) au-dessus de la saillie (10) est pivotée derrière le crochet (7) par sa saillie (8) tournée vers le crochet (7).

2. Ensemble de retenue selon la revendication 1, **caractérisé en ce que** le bord d'appui (9) est prévu approximativement au point le plus bas du cadre (6).

3. Ensemble de retenue selon la revendication 1, **caractérisé en ce qu'**une surface de butée (11) élargie en forme d'entonnoir est prévue sur la partie du cadre (6) orientée de manière diamétralement opposée au crochet (7), surface de butée contre laquelle s'appuie, sous précontrainte radiale, la partie de bride (4) par sa surface d'enveloppe (coin 21) réalisée de manière cunéiforme dans certaines zones suite à la liaison par force (5) située dans la région de la surface de butée (11) .

4. Ensemble de retenue selon la revendication 1, **caractérisé en ce qu'**un filetage intérieur (12) est prévu dans la plaque de retenue (2) en tant que partie de la liaison par force, filetage intérieur dans lequel est vissé, à partir de la direction de l'appareil de frein (14), en tant qu'autre partie de la liaison par force (5), la vis de fixation finale (13) traversant la partie de bride (4).

5. Ensemble de retenue selon la revendication 4, **caractérisé en ce que** le filetage intérieur (12) est reçu dans une douille (18) fixée à la plaque de retenue (2), laquelle douille s'étend dans certaines zones dans un alésage traversant de la partie de bride (4), la partie de bride (4) sur laquelle l'appareil de frein (14) est fixé étant orientée précisément sur la plaque de retenue (2) au moyen de la douille (18), du crochet (7) et du bord d'appui (9) sur la plaque de retenue (2).

6. Ensemble de retenue selon la revendication 1, **caractérisé en ce que** la partie de bride (4) est réalisée sous forme de plaque adaptée dans certaines zones au contour de la plaque de retenue (2), laquelle plaque est dotée d'un prolongement tubulaire (15) pour le passage d'une barre de pédale, lequel prolongement s'étend à travers une ouverture (20) de grandes dimensions dans la plaque de retenue (2).

7. Ensemble de retenue selon la revendication 1, **caractérisé en ce que** la plaque de retenue (2) est fixée au tablier d'auvent (1) au moyen de deux vis de retenue (16) disposées de manière diamétralement opposée.

8. Ensemble de retenue selon la revendication 1, **caractérisé en ce qu'**un joint d'étanchéité (17) est disposé respectivement entre la plaque de retenue (2) et le tablier d'auvent (1) ainsi qu'entre la plaque de retenue (2) et la partie de bride (4).
